# EUROPEAN PATENT APPLICATION

(11) **EP 0 602 916 A2**
(43) Date of publication of application: **22.06.1994**
(21) Application number: 93310001.8
(22) Date of filing: 10.12.1993
(51) Int. Cl.: G06F 15/16

(54) **Cross-bar interconnect apparatus**

(30) Priority: 14.12.1992 US 990672
(71) Applicant: Hewlett-Packard Company, Palo Alto, California 94304 (US)
(72) Inventor: Chalmers III,Franklin Stevin, Auburn CA95602 (US)
(74) Representative: Williams, John Francis

(57) **Abstract**

An improved cross-connect system[22, 30] for connecting data processing modules[11-16] in a multiprocessor computing system is disclosed. The cross-connect system[22,30] includes an arbiter that determines which of a plurality of requesting modules[11-16] is given connection to a given receiving module. The priority decision is based on whether there has been a prior communication between the modules[11-16] in a previous machine cycle.

## Description

### Field of the Invention

The present invention relates to computer systems, and more particularly, to an improved interconnect system for multiprocessor computer systems.

### Background of the Invention

While very large improvements in computer systems have been made by increasing the speed with which processors operate, there is clearly a limit to the improvements that can be obtained merely by speeding up the electronic components. Further increases in the operating speed of the processors requires that the feature size on the integrated circuits be reduced. At present, the industry is at, or near, the limit of fabrication techniques based on lithography using visible light. The cost of systems based on x-ray lithography or other low-wavelength systems represents a significant barrier to continued speed improvements.

As a result, computer designers have turned to multiprocessor systems. Multiprocessor systems in which a plurality of processor and memory modules are joined by a single bus which have been utilized for some time. For example, computer systems often employ special purpose I/O to perform input/output operations in parallel with computational tasks. Unfortunately, it is difficult to construct a system having a large number of modules based on a single bus. At any given time, only one pair of modules can be communicating over the bus. Hence, as the number of modules in the system increases, the time per module available for communication over the bus decreases. When the time available becomes too small, the various modules cannot be kept busy and system performance decreases.

A second class of multiprocessor communication systems that avoid the single bus communication limit is modeled after telecommunication systems. In such systems, a cross-connect switch is used to join the various modules to each other. When one module in the system needs to send a "message" to another module in the system, the module requests a connection through the switch. The connections are established by an arbiter that guarantees that no more than one module is "talking" to any other module.

Cross-connect systems for multiprocessor computer systems differ from telecommunication systems in that the length of the "conversation" is much shorter in the computer system. In computersystems, the various interconnections are changed with every instruction cycle. This assures that no one processor will monopolize any resource in the system. At each instruction cycle, each of the modules requests the connections it needs from the arbiter. The arbiter makes as many of the connections as possible. In those situations in which two modules request connection to a third module, one of the requesting modules is given the connection, and the other is informed that the desired module is busy. The unconnected module must then wait until the next cycle and once again request a connection. The unconnected module may be forced to idle during the instruction cycle in which its request was not honored. In some prior art systems, this problem is partially alleviated by having the cross-connect system accept the message and store it for delivery at a later cycle.

While this system avoids monopolization of resources, it is less than optimal for a substantial fraction of the requested connections. Consider the case of connections between a processor and a memory module that is used to store data being processed by the processor. In those cases in which the processor is fetching data from the memory module, each request for data by the processor is followed by a request to send data by the memory module to the processor. I prior art systems, these requests are treated as independent actions. Hence, the memory module must request a connection to the processor. This request may be denied if some other module is attempting a connection with the processor. This can lead to the memory module being effectively off-line until it succeeds in delivering the requested data. During this time, other processors may also be blocked from obtaining data from the memory module in question.

To avoid this type of bottleneck between processors and memory, some prior art systems give data returning from memory to a processor over new requests to the memory. Such systems require the cross-connect system to keep track of the type of modules connected thereto. In addition, this strategy is of little value if the module returning the data has a long latency time, since other modules may need to send data to the processor that made the original request during the latency time.

Broadly, it is the object of the present invention to provide an improved cross-connect system for use in multiprocessor computer systems.

It is a further object of the present invention to provide a cross-connect system in which certain classes of connection requests determine the result of the arbitration for connections in a succeeding cycle.

These and other objects of the present invention will become apparent to those skilled in the art from the following detailed description of the invention and the accompanying drawings.

### Summary of the Invention

The present invention comprises a cross-connect apparatus for connecting a plurality of data processing modules to each other in a multiprocessor data processing system. The data processing modules are connected to the invention by means of connection ports which provide both data paths and control signal paths. The data paths may be connected to each other via a cross-connect switch matrix. The invention includes an arbiter that determines which of a plurality of ports requesting a connection to the same receiving port is provided with that connection. When a first port requests a connection to a second port, the port can specify that a request for a connection from the second port to the first port is to be given priority in a specified number of machine cycles.

### Brief Description of the Drawings

Figure 1 is a block diagram of a multiprocessor computer system utilizing a cross-connect apparatus according to the present invention.
Figure 2 is a more detailed block diagram of an arbiter according to the present invention.

### Detailed Description of the Invention

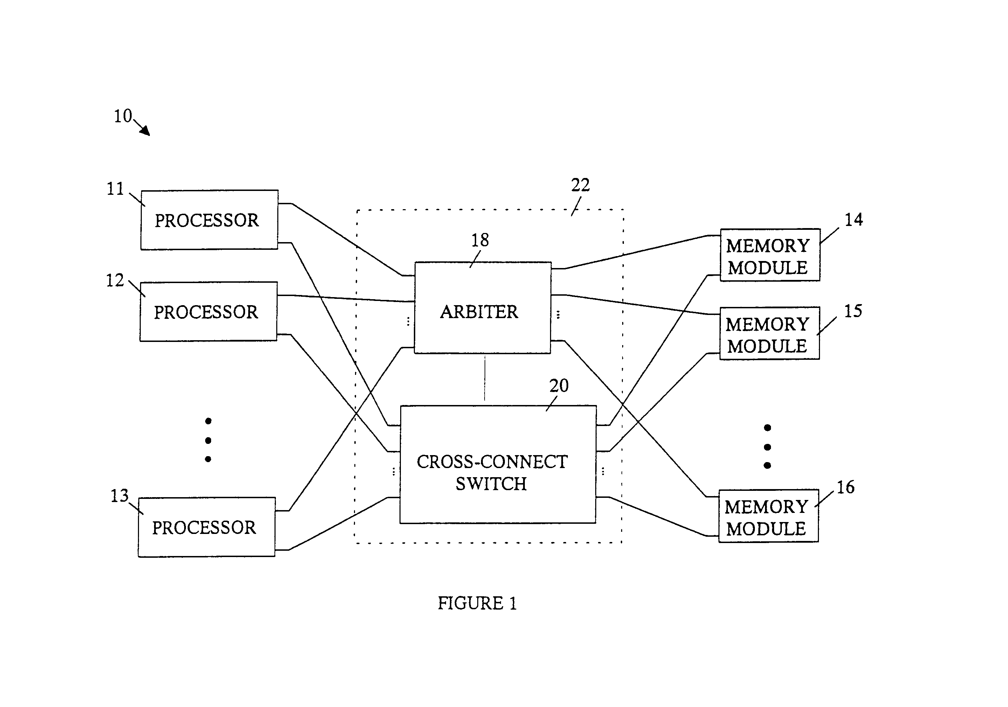

The manner in which the present invention obtains its advantages over the prior art may be more easily understood with reference to Figure 1 which is a block diagram of a multiprocessor computer system 10 including a plurality of processing modules 11-16 connected by a cross-connect system 22. Cross-connect system 22 includes an arbiter 18 and a cross-connect switch 20. The various modules include processors 11-13 and memory modules 14-16. The processors may be general purpose computing elements or special purpose processors such as video subsystems or I/O processors.

When one of the modules, referred to as the sending module, wishes to send a data word to another one of the modules, referred to as the receiving module, it transmits a request for a connection to arbiter 18. If the receiving module has not been requested by other modules, then arbiter causes cross-connect switch 20 to make the connection. If more than one transmitting module has requested the receiving module in question, then arbiter 18 selects one of the transmitting modules to be connected to the receiving module. The remaining transmitting modules must try again in a successive machine cycle. As noted above, prior art systems attempt to arbitrate in a manner that prevents any one transmitting module from monopolizing a receiving module.

While this procedure prevents monopolization of a particular receiving module by a particular transmitting module, it is not always the optimum procedure for maximizing the computational throughput of computer system 10. There are certain computer instructions which imply a response. For example, if one of the processors requests a data word from another processor such as a memory module or an I/O port, two instructions are given. A read instruction is first transmitted to the receiving module. The receiving module then transmits the requested data back to the processor on one of the succeeding cycles, depending on the latency time of the receiving module. The processor in question may be idled if the data is not returned with the predicted latency time. In general, processors can reduce the effects of latency time by scheduling other operations during the latency time. For such schemes to be effective, the processors must know the latency time of each operation. Prior art cross-bar switching systems reduce the predictability of the latency time, since the return transmission may be delayed by the arbiter.

The present invention reduces the uncertainty introduced by the arbiter by utilizing an arbitration scheme in which the return message is given priority at the machine cycle in which a return is expected. As will be discussed in more detail below, there are a number methods by which arbiter 18 may be "informed" of the time at which a return message is expected. When arbiter 18 detects an outgoing message from a first module to a second module in which a reply is expected in L cycles, a connection between the first and second modules in the direction of the reply is given priority over all other connections in L machine cycles. If the second module does, in fact, request a connection to the first module, that connection is assured. If the second module does not request such a connection because no reply is forthcoming, the arbiter may assign a connection to one of the first or second modules to some other module in the system.

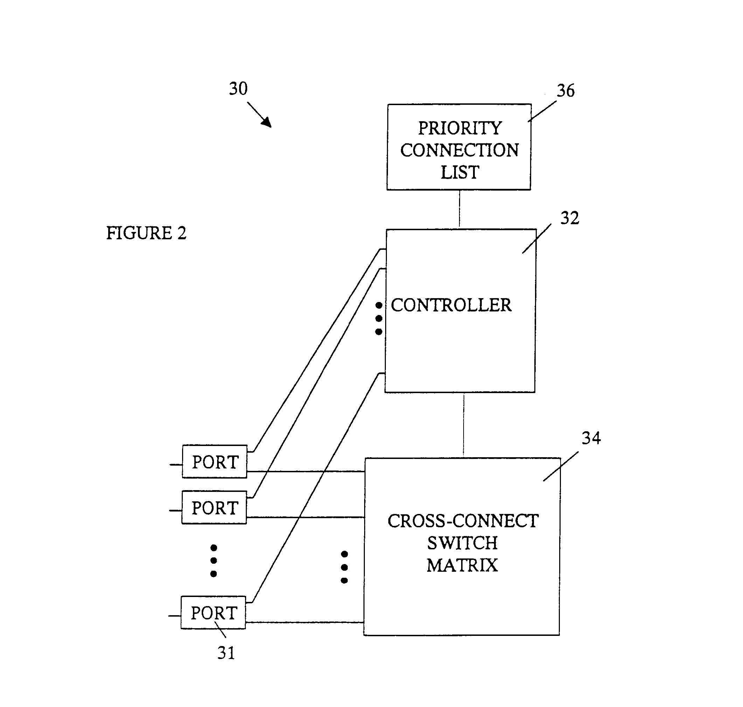

Refer now to Figure 2 which is a more detailed block diagram of an arbiter 30 according to the present invention. Forthe purposes of this discussion, the determination of the existence of a priority response situation will be assumed to be communicated to controller 32 through each of the ports 31 used to connect a processor or computing module to cross-connect system 22. When a sending module requests a connection to a receiving module, it may also request that a priority slot be reserved for the receiving module to send a return message to the sending module in a specified number of machine cycles. Information specifying the sending module, receiving module, and number of machine cycles in which the request for the connection is expected is stored in a memory 36. Each machine cycle, counters associated with each of the entries in memory 36 are decremented and tested. When a counter reaches zero, controller 32 tests for a request for a connection between the corresponding sending and receiving modules. If such a request is detected, the connection in question is given priority and the corresponding entry in memory 36 is deleted. If no request is present, then other modules seeking to communicate with the specified sending and receiving modules may be assigned connections during the current machine cycle.

If the latency time of the original receiving module is always the same, controller 32 could, in principle, discard any entry in memory 36 when the corresponding timer in memory 36 reaches zero. However, latency times may vary somewhat. In addition, a conflict between two priority entities may arise, leading to one of the communications being delayed. Hence, in the preferred embodiment of the present invention, the entries in memory 36 for which requests are not detected when the counter reaches zero are maintained for a predetermined number of machine cycles before being discarded. If during this period, a request corresponding to such an overdue entry is detected, the requested connection is given priority.

The above discussion assumed that the identification of a priority return message situation and the expected number of machine cycles in which the return message is expected is communicated by the ports 31 or the modules connected thereto at the time original message is sent. In another embodiment of the present invention, arbiter 30 automatically assumes that certain connections wi II always result in a priority return message situation. For example, controller 32 may include a list of connections between each port and the remaining ports which specifies whether a message from said port to each of the other ports is expected to generate a return message, and if so, the number of machine cycles in which the return message is expected. This information is supplied at the time the system is constructed. Alternatively, the information may be stored in the ports 31. In this case, each port includes a list of possible connections that are expected to generate a return message and the time at which the return message is expected. This information may be loaded into the port at the time the module attached to the port is connected thereto. The port is then responsible for informing controller 32 of the existence of a priority return situation and the number of cycles in which the return message is expected.

It should be noted that if the arbiter is a pipelined processor, some or all of the entries stored in memory 36 can be stored in the pipeline stages within the arbiter. In this case, memory 36 may not exist as a separate identifiable component within the system. In such a system, the count described above can be inferred from the pipeline stage in which the information is currently stored. The count would then be effectively decremented as the information is advanced to a subsequent stage of the pipeline. In this embodiment, priority requests could be created by storing the connection information directly into the pipeline stage corresponding to the latency of the memory or processor being addressed.

While the above-described embodiments have assumed that the return message is a single word, it will be apparent to those skilled in the art that the return message may include a plurality of words. In this case, the message will last for a corresponding number of machine cycles. The original message can provide information to controller 32 specifying the length of the reply. In this case, each entry in memory 36 would include a second counter indicating the number of machine cycles for which priority is to be maintained. This number would be set to accommodate the indicated number of words.

Various modifications to the present invention will become apparent to those skilled in the art from the foregoing description and accompanying drawings. Accordingly, the present invention is to be limited solely by the scope of the following claims.

## Claims

1. A cross-connect apparatus[22, 30] for connecting a plurality of data processing modules[11-16] to each other in a multiprocessor data processing system, said apparatus[22, 30] comprising: port means[31] for sending messages to and receiving messages from said data processing modules[11-16], said port means comprising a plurality of connection ports[31], each said connection port[31] connecting one data processing module[11-16] to said apparatus; means[32], connected to said port means[31], for receiving control signals specifying a request for a connection between two of said connection ports[31]; cross-connect means[20,34] for connecting a said connection port[31] to any of the others of said connection ports[31]; clock means for defining successive machine cycles; arbitration means[18], responsive to a plurality of said connection ports[31] requesting connection to the same connection port[31], referred to as the receiving port, for the purpose of sending a message to said receiving port, for choosing one of said plurality of said connection ports[31] for connection to said receiving port, said arbitration means[18] further comprising means[36] for storing a first list of possible connections between first and second ports and a count associated with each entry in said first list, said count indicating the number of machine cycles in which a request for connection between said first and second ports is to be given priority over other requested connections between others of said ports and said first or second ports, said count being altered with each machine cycle.

2. The apparatus[22, 30] of Claim 1 wherein one of said ports[31] generates signals specifying an entry in said list when a device connected thereto indicates that said device wishes to send a message to another device connected to another of said ports[31].

3. The apparatus[22, 30] of Claim 1 wherein said arbitration means[18] further comprises means for storing a second list of connections between first and second ports and a count associated with each said entry in said second list, and wherein an entry from said second list is copied to said first list when said arbitration means detects a request for a connection between first and second ports included in said first list.

4. The apparatus[22, 30] of Claim 1 wherein said first list further comprises a second count associated with each entry therein, said second count indicating the number of machine cycles for which a connection between said first and second ports is to have priority over other connections involving said first and second ports.
